# EUROPEAN PATENT APPLICATION

(11) **EP 4 075 608 A1**
(43) Date of publication of application: **19.10.2022**
(21) Application number: 21382308.1
(22) Date of filing: 12.04.2021
(51) Int. Cl.: H01R 11/15, H02G 1/02, H01R 13/639

(54) **EARTHING ASSEMBLY OF AN ELECTRICAL CONDUCTOR OF AN OVERHEAD ELECTRICAL LINE**

(71) Applicant: Sofamel, SLU, 08787 La Pobla de Claramunt (ES)
(72) Inventor: EDO LINARES, Héctor, 08719 Castellolí (ES); PALACIOS PÉREZ, Xavier, 08710 Santa Margarida de Montbui (ES)
(74) Representative: Juncosa Miró, Jaime

(57) **Abstract**

The invention relates to a grounding assembly of an electrical conductor of an overhead power line, particularly a medium- or high-voltage line, comprising: a securing member with first jaws, for the coupling thereof to a ground connection, a clamp with second jaws for coupling in an electrical conductor of an overhead power line, an electric cable connecting the securing member with the clamp, and a pole that can be connected to the clamp. The securing member includes a self-locking mechanism configured for retaining a stud inside a first housing of the securing member and for releasing said stud and allowing it to be extracted from the first housing, and the stud has a first end that can be coupled to the clamp and a second end that can be coupled to the pole, connecting the pole with the second tightening device of the clamp through the stud.

## Description

### Technical Field

The present invention relates to an assembly used for the maintenance of overhead power lines, particularly medium- and high-voltage lines, comprising an assembly for grounding each of the conductors or phases of said overhead power line for a safe intervention on the line.

The assembly comprises a securing member with first jaws for the fixing thereof to a ground connection, a first tightening device for actuating at least one element of said first jaws and a locking device of said tightening device which can be enabled or disabled, a clamp provided with second jaws for the coupling thereof to an electrical conductor of an overhead line, and a second tightening device for actuating at least one element of said second jaws, an electrically insulated electric cable electrically connecting the securing member with the clamp, and a pole that can be connected to the clamp, intended for being handled by an operator to engage the clamp with a raised electrical conductor of an overhead line for the purpose of grounding same, said pole allowing the clamp to be fixed to the overhead electrical conductor by tightening the second jaws of the clamp.

The invention proposes a stud acting to enable the tightening of the securing member and the locking thereof when released from said securing member and also acting in the transmission of an actuation torque to the clamp by means of the pole, and an auxiliary element with a key configuration assembled in the mentioned stud for coupling with the pole and for facilitating said torque transmission by means of the pole, and on the other hand operating with the securing member to allow the stud to be reinserted and to allow said securing member to be loosened, all of this determining a very precise operating sequence for the assembly of the securing member and the clamp and for the disassembly thereof, resulting in absolute operating safety for an operator who, at no time, will be able to act inappropriately or incorrectly, whether voluntarily or involuntarily, since the stud used is installed either in the clamp or in the securing member, in each of the operating phases.

### State of the Art

Patent document EP2347441 B1 describes a grounding device of an electrical conductor of an overhead power line comprising a securing screw provided with means for holding same in a grounded element as well as means for operating these holding means, and on the other hand a clamp with means for holding same in an electrical conductor of an overhead power line, as well as means for operating these holding means, and an electrically insulated electric cable for the connection of the clamp to the securing screw. The features of said holding means and means for operating the screw and the clamp allow either just the means for operating the securing screw to be actuated, excluding the means for operating the clamp, or else allow the means for operating the clamp to be operated, excluding the means for operating the securing screw, and thus allow the simultaneous actuation of the means for actuating the securing screw and the clamp to be avoided.

Patent document EP2882043B1 relates to a grounding device with a clamp-screw servomechanism, comprising: a grounding screw, equipped with a mechanical locking system, which is provided with a mechanical switch; a grounding clamp, equipped with a mechanical locking mechanism provided with a mechanical switch; the mentioned grounding screw being connected by an insulated electrical conductor to the mentioned grounding clamp, the mentioned grounding clamp being in its closed initial state and controlled by its locking mechanism, which closes at the same time the associated mechanical switch; and the mentioned grounding screw being in its initial state open and unlocked, with the mentioned associated mechanical switch likewise being open. The mentioned mechanical switch of said grounding screw includes an electronically controlled and operated unlocking device, preferably having a separate electronic circuit; with an electronic memory containing at least one unique identifier and preferably having a separate electronic circuit; with an electronic connector, which groups together the different electronic circuits for the external connection thereof; and the mentioned grounding clamp is furthermore equipped: with an electronic control circuit in which the mentioned mechanical switch of the mentioned grounding clamp is integrated; with an electronically controlled and operated unlocking device, the mentioned unlocking device preferably having a separate electronic circuit; with an electronic memory containing at least the unique identifier thereof and preferably having a separate electronic circuit, the mentioned identifier of the grounding clamp being associated with the identifier of the grounding screw with which the mentioned grounding clamp is connected by the insulated electrical conducting cable thereof; and with an electronic connector which groups together the different electronic circuits for the external connection thereof.

The present invention proposes an alternative solution with respect to those set forth by the two preceding documents which provides greater simplicity and equivalent safety conditions.

### Brief Description of the Invention

As has been mentioned and is known in the state of the art, the grounding assembly of an electrical conductor of an overhead power line comprises a securing member or vise for the fixing thereof to a ground connection, a clamp for the coupling thereof to an electrical conductor of an overhead line, an insulated electric cable connecting said securing member and clamp, and a pole that can be connected to the clamp for positioning same next to the electrical conductor of interest.

The securing member has a first jaw mechanism, a first tightening device of said first jaw mechanism, and a locking device which allows the actuation of said first tightening device in an enabled position and leaves it locked in a second disabled position.

The clamp likewise has a second jaw mechanism and a tightening device of said second jaws.

According to this invention, the first locking device of the securing member includes a self-locking mechanism configured for retaining a stud inside a first housing of the securing member during an operation of the first tightening device for closing the first jaws and for releasing said stud and allowing it to be extracted from the cavity when the first jaws reach a predetermined tightening torque.

When the stud is free, it can be associated with the clamp, being arranged introduced in a second housing configured in said clamp, and the stud has a first end that can be coupled to the second tightening device of the clamp and a second end that can be coupled to the pole, connecting the latter with the second tightening device of the clamp through the stud, such that the tightening movement of the pole is transmitted through the stud and the actuation of the second tightening device of the clamp without the stud is prevented.

That is, the invention proposes using a stud so that, in the absence thereof, the securing member is locked, in a grounded connection and allowing said stud to link the upper end of the pole with the clamp. The assembly and disassembly operation of the assembly thereby imposes a predetermined sequence which assures at all times that the stud has to be in one element or the other.

For the purpose of increasing safety of the proposed assembly, the mentioned second end of the stud includes a lock configured for receiving by insertion a key configuration of an auxiliary element, which is connected by abutment to said second end of the stud, establishing the connection between the pole with the stud through said auxiliary element, interposed therebetween, with its key configuration inserted in the lock configured in the stud.

The mentioned key of the auxiliary element allows controlling a retractable latch of the mentioned stud, which allows connecting and disconnecting the stud-auxiliary element assembly with respect to the pole, as will be explained in detail below. On the other hand, the mentioned key of the auxiliary element also allows actuating a lock arranged next to the access of the cavity of the securing member, and will enable the insertion of stud, after the release thereof, allowing the mentioned self-locking mechanism to be unlocked.

Therefore, the key and auxiliary element assembly are coupled by abutment and are axially connected for transmitting a tightening torque to the second tightening device of the second jaws of the clamp, and by means of the key inserted in the lock of the stud, a latch which connects the assembly to the end of the pole is actuated and allows the clamp to be operated when the latch is inserted into the clamp. Once the clamp is firmly attached to the electrical conductor of the overhead line, the pole and the installation of the ground connection can be removed for said electrical conductor or phase to be completed.

The pole is provided at its proximal end with a device for actuating the key configuration of the auxiliary element, through a rotating shaft arranged axially inside said pole.

Once the pole is removed, the auxiliary element with the key is recovered, although the stud is still inserted in the clamp, and no operation in the securing member is possible.

To recover the stud, it must be operated by again coupling the pole with the auxiliary element and the key configuration of the latter with the lock of the end of the stud, establishing a secure connection between stud-auxiliary element and pole and allowing the clamp to be loosened until it is released.

Only when the stud is recovered, once the clamp is released, is it possible to introduce the stud into the securing member again by means of the key of the auxiliary element, by actuating the lock of the securing member and only under said circumstance may the self-locking mechanism be disabled and said ground connection loosened.

The invention proposes a stud, auxiliary element, and securing member assembly, where said parts are unique for each electrical conductor or phase to be grounded, given that the key configuration of said auxiliary element must actuate the locks of the latch and of the securing member that have been described.

It can be seen that the assembly and disassembly operations of the grounding assembly must follow the predetermined sequence that has been described.

Other features of the invention will become apparent in the following detailed description of an embodiment.

### Brief Description of Figures

The preceding and other advantages and features will be better understood based on the following detailed description of an embodiment in reference to the attached drawings, which must be interpreted in an illustrative and non-limiting manner, wherein:
Figure 1 is a perspective view of a securing member adopting a vise structure, known in the mentioned state of the art.

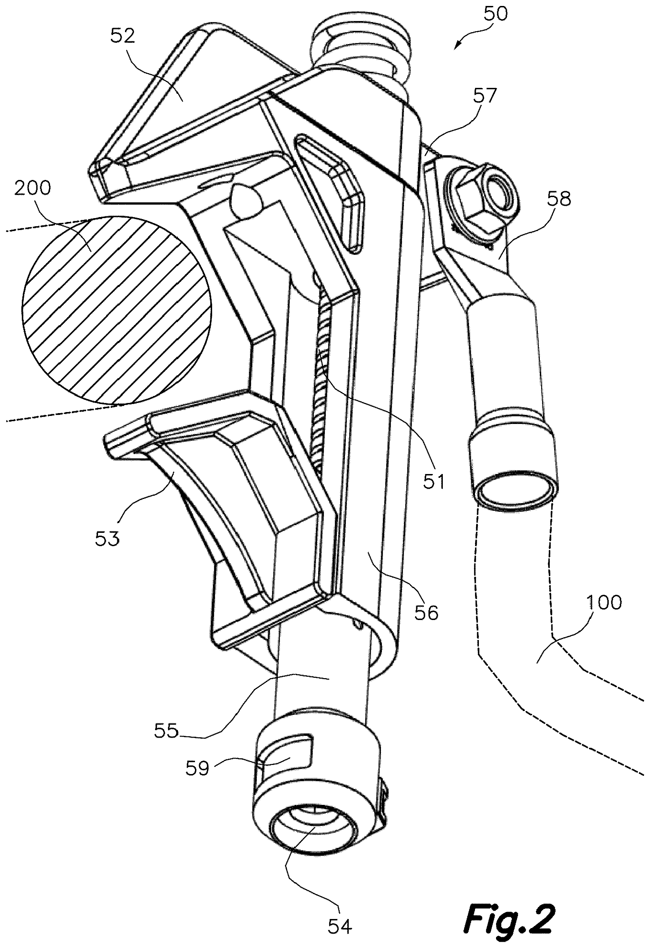

Figure 2 illustrates in another perspective view a clamp with second jaws, intended for engaging an electrical conductor of an overhead power line, holding it with said jaws.

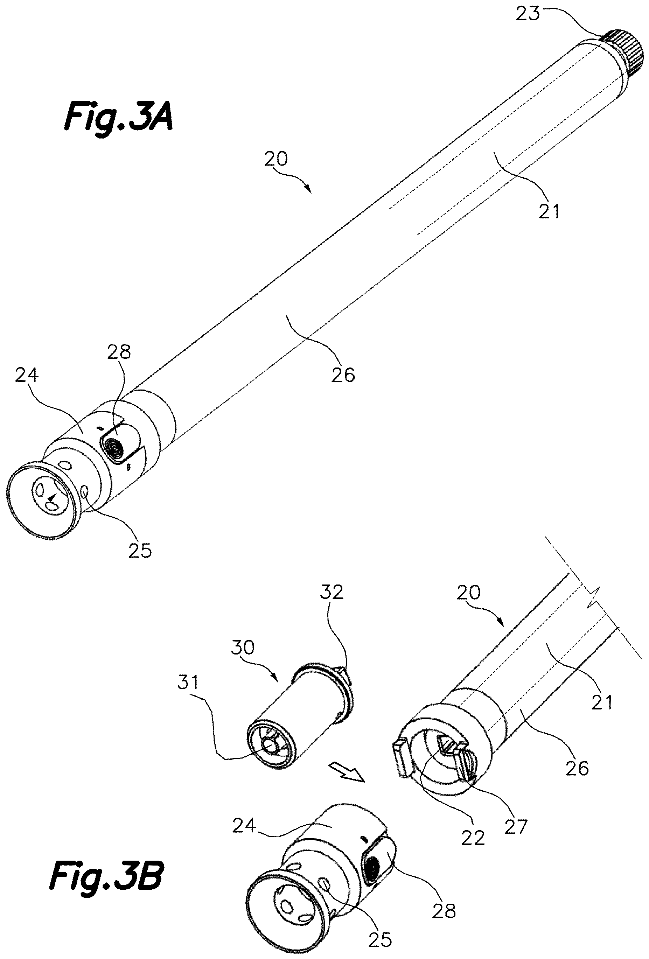

Figure 3A shows a perspective view of a pole intended for being handled by an operator to engage the clamp of Figure 2 with the mentioned electrical conductor.
Figure 3B is equivalent to the preceding figure but in which there has been separated a coupling socket which allows the arrangement therein of an auxiliary element connected to the end of a rotating shaft, this auxiliary element being depicted separately to the side and illustrating means for coupling the coupling socket to the end of the pole.

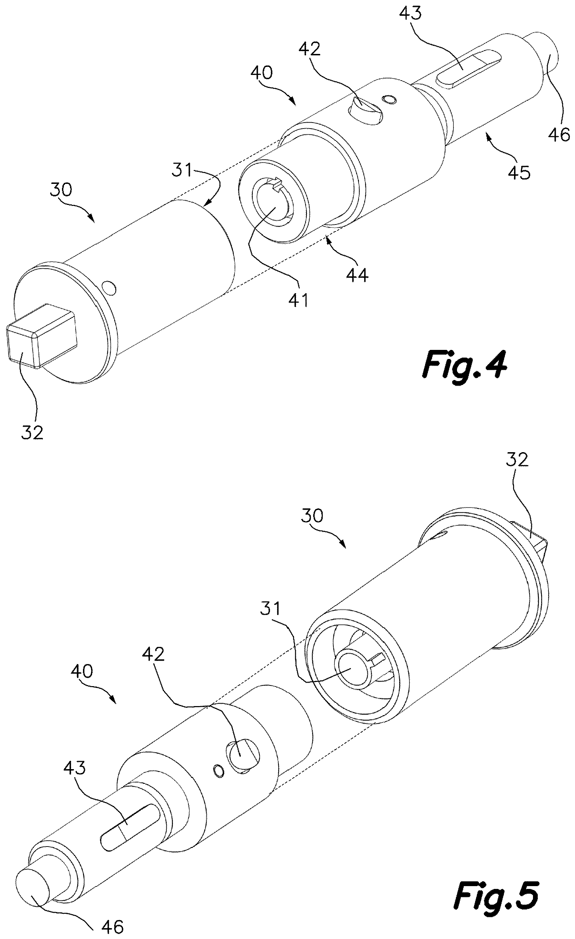

Figures 4 and 5 show two perspective views of stud and auxiliary element assemblies which are arranged coupled by abutment and aligned for connecting the pole to the clamp.

Said figures show in detail a stud, which is used in the grounding assembly of this invention cooperating in the locking or enabling of the securing member and which allows transmitting a tightening torque to the clamp, and there is also shown an auxiliary element which provides reinforced safety to the operation of the grounding assembly, and including at one of its ends a key configuration which acts to allow the insertion of the stud in the first housing of the securing member, and to couple the pole to the clamp, as will be explained in detail below.

### Detailed Description of an Embodiment

The grounding assembly of an electrical conductor 200 of an overhead power line, particularly a medium- or high-voltage line, to which this invention relates comprises, according to the well-known art in the sector:
- a securing member 10 intended for being connected to a ground connection provided with:
   - first jaws 11, 12 for holding a grounded, electrically conductive element 1;
   - a first tightening device 13 for actuating the first jaws 11, 12, and
   - a locking device which allows the actuation of the first tightening device 13 in an enabled position and prevents the actuation of the first tightening device 13 in a disabled position;
- a clamp 50 provided with:
   - second jaws 52, 53 for holding an electrical conductor 200 of an overhead power line, and
   - a second tightening device 51 for actuating the second jaws 52, 53;
- an electrically insulated electric cable 100 electrically connecting the securing member 10 with the clamp 50, and
- a pole 20 that can be connected to the clamp 50, intended for being operated by an operator to engage the clamp 50 with the electrical conductor 200 and fix said clamp 50 to the mentioned electrical conductor 200.

The grounding assembly proposed in this invention provides to said known elements a stud 40 which is intended for being partially introduced in a first housing 15 of the securing member 10, which is configured for being retained in said cavity by a self-locking mechanism during an operation of the first tightening device 13 of said securing member, and for being free, allowing it to be extracted from said first housing 15 when the first jaws 11, 12 reach a predetermined tightening torque, the stud 40 then being used in the coupling of the pole to the clamp.

As is well known, one of said jaws 11, 12 is fixed.

For such purpose, the stud 40 has a first end 45 that can be coupled to the second tightening device 51 of the clamp 50 by the introduction in a second housing 54 of a casing 56 of the clamp 50, and a second end 44 that can be coupled to the pole 20, connecting the pole 20 with the second tightening device 51 of the clamp 50 through the stud 40, and transmitting a rotational movement through the stud 40, acting on the pole 20, gripping it by its outer tubular wall 26, and preventing the actuation of the second tightening device 51 without the presence of the stud 40.

Next to said second housing there has been provided a retaining element 59 for retaining the mentioned inserted stud 40, which can be released by pressure.

According to a preferred feature of this invention, the second end 44 of the stud 40 includes a lock 41 configured for receiving by insertion a key configuration 31 of an auxiliary element 30 which is configured for being connected by abutment to said second end 44 of the stud 40, forming an assembly which allows a connection to be established between the pole 20 and the stud 40, through said auxiliary element 30, interposed therebetween, with its key configuration 31 inserted in the lock 41 of the end of the stud 40.

The mentioned stud 40 further comprises in a first tubular section close to the second end 44 including the lock 41, a spring-loaded, retractable latch 42, susceptible to projecting or being retracted in relation to said first tubular section, wherein the latch 42 can be actuated by the key configuration 31. Furthermore, in a second tubular portion close to the first end 45, the stud 40 has a shaft key 43 for a rotational coupling and driving of the second tightening device 51 of the clamp 50.

In one embodiment, the auxiliary element 30 adopts a tubular configuration and includes at a distal end of the key configuration 31 a protuberance 32 configured for the coupling thereof in a cavity 22 of an end of a rotating shaft 21 arranged coaxially inside the pole 20, said cavity 22 being distal of the device 23 for actuating the mentioned rotating shaft 21, and the key configuration 31.

In turn, the end of the pole 20 comprises a detachable coupling socket 24 which is arranged surrounding the auxiliary element 30 and stud 40 assembly, connected to one another, aligned, and coupled, respectively, to the cavity 22 of the end of the pole and to the second tightening device 51 of the clamp 50, the retractable latch, operated by the key configuration 31, being arranged projecting through a window 25 of the coupling socket 24, thereby integrally connecting the pole and stud 40 for control of the first tightening device 13 .

The mentioned coupling socket 24 comprises retractable side latches 28 for a detachable connection of said coupling socket 24 in a configuration in the form of a flange 27 at the end of the pole 20.

The clamp 50 in turn includes a casing 56 with an appendage 57 in which a connector 58 of the mentioned cable 100 is fixed, said casing 56 having attached thereto a first fixed jaw 52, and comprising a sleeve 55 internally and coaxially integrating said second tightening device 51 consisting of a worm screw mechanism connected to the second jaw 53 movable along guides of said casing 56.

The securing member 10 in turn has a portion on its casing 16 for the fixing of a connector of the mentioned cable 100.

The mentioned device 23 for actuating the key configuration 31 through the rotating shaft 21 adopts a cylindrical configuration projecting from a tubular wall 26 of the pole 20 with a knurled outer surface.

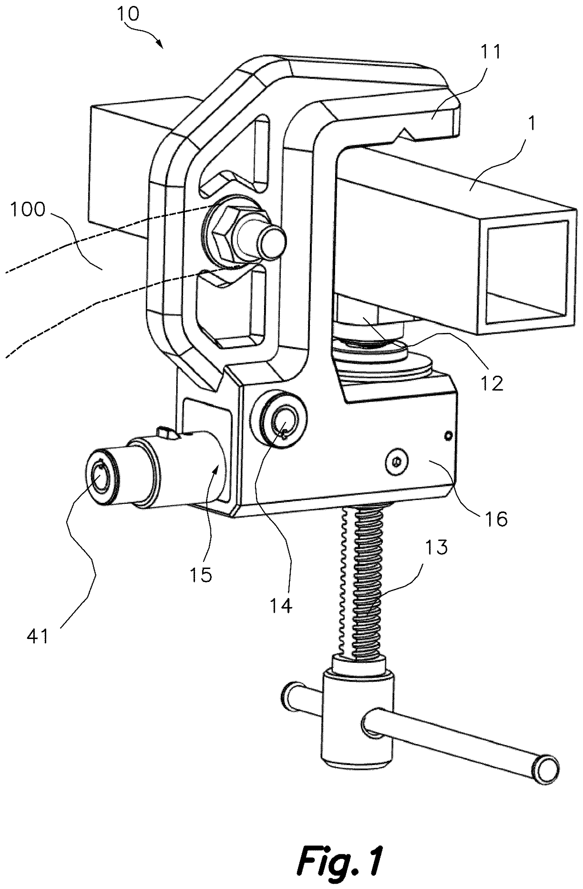

As can be seen in Figure 1, the securing member 10 includes a lock 14 which is complementary to the key configuration 31 of the auxiliary element 30 which, by means of its actuation, enables the insertion of the stud 40 in the first empty housing 15, unlocking the self-locking mechanism.

For such purpose, the stud 40 comprises at the first end 45 a protuberance 46 susceptible to contacting said self-locking mechanism of the securing member 10 when the stud 40 is inserted in the first housing 15 of the securing member 10 .

As shown in Figure 1, the lock 14 is arranged next to the inlet of the first housing 15 of the securing member 10 intended for receiving the stud 40 by insertion and the mechanism of said lock 14 is configured for acting on an element locking the inlet of the stud 40 which, once relocated in said first housing 15, the end 46 thereof allows disabling the self-locking mechanism.

## Claims

1. A grounding assembly of an electrical conductor (200) of an overhead power line, particularly a medium- or high-voltage line, comprising:
- a securing member (10) provided with first jaws (11, 12), for the coupling thereof to a ground connection (1), with a first tightening device (13), for actuating at least one of said first jaws (11, 12), and with a locking device which allows the actuation of the first tightening device (13) in an enabled position and prevents the actuation of the first tightening device (13) in a disabled position;
- a clamp (50) provided with second jaws (52, 53) for the coupling thereof in an electrical conductor (200) of an overhead power line, with a second tightening device (51) for actuating at least one of said second jaws (52, 53);
- an electric cable (100) electrically connecting the securing member (10) with the clamp (50),
- a pole (20) that can be connected to the clamp (50) for actuating the second tightening device (51);
**characterized in that**
the first locking device of the securing member includes a self-locking mechanism configured for retaining a stud (40) inside a first housing (15) of the securing member (10) during an operation of the first tightening device (13) and for releasing said stud (40) and allowing it to be extracted from the first housing (15) when the first jaws (11, 12) reach a predetermined tightening torque; and
the stud (40) has a first end (45) that can be coupled to the second tightening device of the clamp (50) introduced in a second housing (54) thereof, and a second end (44) that can be coupled to the pole (20), connecting the pole (20) with the second tightening device (51) of the clamp (50) through the stud (40), transmitting the movement of the pole (20) through the stud (40) and preventing the actuation of the second tightening device (51) without the stud (40).

2. The grounding assembly according to claim 1, wherein said second end (44) of the stud (40) includes a lock (41) configured for receiving by insertion a key configuration (31) of an auxiliary element (30) connected by abutment to said second end (44) of the stud (40), establishing the connection between the pole (20) with the stud (40) through said auxiliary element (30), interposed therebetween, with its key configuration (31) inserted in the lock (41) configured in the stud (40).

3. The grounding assembly according to claim 2, wherein the stud (40) further comprises in a first tubular section close to the second end (44) including the lock configuration (41), a spring-loaded retractable latch (42), that can be actuated by said key (31), and in a second tubular portion close to the first end (45) it has a shaft key (43) for a rotational coupling and driving of the second tightening device (51) of the clamp (50).

4. The grounding assembly according to any one of the preceding claims, wherein the auxiliary element (30) adopts a tubular configuration and includes at a distal end of the key configuration (31) a protuberance (32) configured for the coupling thereof in a cavity (22) of an end of a rotating shaft (21) arranged axially inside the pole (20), said cavity (22) being distal of a device (23) for the rotational actuation of said rotating shaft (21) and, through same, of said key configuration (31).

5. The grounding assembly according to claim 4, wherein the end of the pole (20) comprises a detachable coupling socket (24) which is arranged coaxial to the auxiliary element (30) and stud (40) assembly, connected to one another, aligned, and coupled, respectively, to the cavity (22) of the end of the pole and to the second tightening device (51) of the clamp (50), the retractable latch being arranged projecting through a window (25) of the coupling socket (24), integrally connecting the pole and stud (40) for control of the first tightening device (13).

6. The grounding assembly according to claim 1, wherein the clamp (50) comprises a casing (56) having attached thereto a first fixed jaw (52) and housing a sleeve (55) internally and coaxially integrating said second tightening device (51) consisting of a worm screw mechanism connected to the second jaw (53) movable along guides of said casing (56).

7. The grounding assembly according to claim 6, wherein said casing has an appendage (57) in which a connector (58) of the mentioned cable (100) is fixed.

8. The grounding assembly according to claim 1, wherein said device (23) for the rotational actuation of the rotating shaft (21) and for the actuation, through same, of the key configuration (31) adopts a cylindrical configuration projecting from a tubular wall (26) of the pole (20) with a knurled outer surface.

9. The grounding assembly according to claim 2, wherein the securing member (10) includes a lock (14) which is complementary to the key configuration (31) of the auxiliary element (30) which, by means of its actuation, enables the insertion of the stud (40) in the first empty housing (15), unlocking the self-locking mechanism.

10. The grounding assembly according to any one of the preceding claims, wherein the stud (40) comprises at the first end (45) a protuberance (46) susceptible to contacting said self-locking mechanism of the securing member (10) when the stud (40) is inserted in the cavity (15) of the securing member (10).

11. The grounding assembly according to claim 1, wherein said securing member has a portion for the fixing of a connector of the mentioned cable (100).

12. The grounding assembly according to claim 9, wherein the lock (14) is arranged in a casing (16) of the securing member (10) next to the inlet of the first housing (15), intended for receiving the stud (40) by insertion, and the mechanism of said lock is configured for acting on an element locking the entry of the stud (40) which, once relocated in first housing (15), the end (46) thereof disables the self-locking mechanism.
